# EUROPÄISCHE PATENTSCHRIFT

(11) **EP 3 983 760 B1**
(45) Veröffentlichungstag und Bekanntmachung des Hinweises auf die Patenterteilung: **22.05.2024**
(21) Anmeldenummer: 20723857.7
(22) Anmeldetag: 06.05.2020
(51) Int. Cl.: G01F 1/66, G01F 23/296, G01N 9/00, G01N 11/16

(54) **VIBRONISCHER MULTISENSOR**
VIBRONIC MULTISENSOR
MULTICAPTEUR VIBRONIQUE

(30) Priorität: 13.06.2019 DE 102019116150
(43) Veröffentlichungstag der Anmeldung: 20.04.2022
(73) Patentinhaber: Endress+Hauser SE+Co. KG, 79689 Maulburg (DE)
(72) Erfinder: SCHLEIFERBÖCK, Jan, 79595 Rümmingen (DE); BRENGARTNER, Tobias, 79312 Emmendingen (DE); LOPATIN, Sergey, 79540 Lörrach (DE); SPRINGMANN, Thorsten, 79688 Hausen (DE); KUHNEN, Raphael, 79418 Schliengen (DE)
(74) Vertreter: Koslowski, Christine Adelheid
(86) Internationale Anmeldenummer: PCT/EP2020/062516
(87) Internationale Veröffentlichungsnummer: WO 2020/249317

(56) Entgegenhaltungen:
- DE-A1- 3 149 909
- DE-A1- 10 350 084
- DE-A1-102011 013 687
- DE-A1-102016 120 326
- DE-B3-102006 045 654
- US-A- 4 299 114

## Beschreibung

Die Erfindung betrifft eine Vorrichtung zur Bestimmung und/oder Überwachung von zumindest drei unterschiedlichen Prozessgrößen eines Mediums.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor ≥1 ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, DE102005015547A1, DE102009026685A1, DE102009028022A1, DE102010030982A1 oder DE102010030982A1 beschrieben.

Sowohl das Anregesignal als auch das Empfangssignal sind charakterisiert durch ihre Frequenz ω, Amplitude A und/oder Phase Φ. Entsprechend werden Änderungen in diesen Größen üblicherweise zur Bestimmung der jeweiligen Prozessgröße herangezogen. Bei der Prozessgröße kann es sich beispielsweise um einen Füllstand, einen vorgegebenen Füllstand, oder auch um die Dichte oder die Viskosität des Mediums, sowie um den Durchfluss handeln. Bei einem vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also anhand einer Frequenzverschiebung, unterschieden.

Die Dichte und/oder Viskosität wiederum lassen sich mit einem derartigen Messgerät nur ermitteln, wenn die schwingfähige Einheit vollständig vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten.

Mit einem vibronischen Sensor lassen sich entsprechend mehrere Prozessgrößen bestimmen und für eine Charakterisierung des jeweiligen Prozesses heranziehen. In vielen Fällen werden für eine umfassende Prozessüberwachung und/oder -kontrolle allerdings weitere Informationen über den Prozess, insbesondere Kenntnis über weitere physikalische und/oder chemische Prozessgrößen und/oder -parameter benötigt. Dies kann beispielsweise durch die Integration weiterer Feldgeräte in den jeweiligen Prozess erreicht werden. Dann können die von den verschiedenen Messgeräten zur Verfügung gestellten Messwerte in einer den Geräten übergeordneten Einheit geeignet weiterverarbeitet werden.

Nun ist es aber so, dass die unterschiedlichen Messgeräte zum einen über unterschiedliche Messgenauigkeiten verfügen. Darüber hinaus können Drift- und/oder Alterungseffekte jeweils sehr unterschiedlich sein. Solche Effekte können aber die jeweilige Messung bzw. Prozessüberwachung und/oder -kontrolle erheblich erschweren bzw. ungenau machen. Darüber hinaus kann es schwierig sein, den jeweiligen Zustand der einzelnen Feldgeräte jeweils im fortlaufenden Betrieb festzustellen. So ist aus der bisher unveröffentlichten deutschen Patentanmeldung mit dem Aktenzeichen 102018127526.9 ein vibronischer Multisensor bekannt geworden, mittels welchem sowohl das vibronische Messprinzip als auch das Ultraschall-Messprinzip zur Bestimmung und/oder Überwachung einer oder mehrerer Prozessgrößen möglich ist.

Die DE 10 2016 120 326 A1 offenbart eine Schwinggabel, die z. B. die Ermittlung des Füllstands oder der Dichte eines Mediums erlaubt. Dabei ist mindestens ein piezoelektrisches Element vorhanden. In einer Ausgestaltung wird zusätzlich eine Umgebungstemperatur ermittelt.

Die DE 10 2006 045 654 B3 offenbart ein Messgerät zur Ermittlung eines Füllstands und einer Dichte eines Mediums. Der Messung dient ein scheibenförmiger piezokeramischer Sensor. Ein Temperatursensor ist vorgesehen, um eine Kompensation von Temperatureffekten durchzuführen. Die DE 103 50 084 A1 offenbart eine ähnliche Sensoreinrichtung mit einem Piezoelement für die Messung des Füllstand und der Viskosität eines Mediums. Dabei werden Ultraschallwellen von einem Piezoelement gesendet und empfangen. Für den Füllstand wird die Laufzeit der Signale ausgewertet und für die Ermittlung der Viskosität wird ein Frequenzsweep durchgeführt. Bei der Viskositätsmessung kommt noch ein Temperatursensor zum Einsatz. Die DE 10 2011 013 687 A1 offenbart einen ebenfalls ähnlichen Füllstandssensor mit einem scheibenförmigen Ultraschallwandler. Die Signale werden dabei von der Flüssigkeitsoberfläche und von Referenzreflektoren reflektiert und ausgewertet.

Die DE 31 49 909 A1 offenbart ein Messgerät zur Erfassung des Füllstands, wobei in den zwei Zinken einer Gabel jeweils ein Ultraschallwandler eingebracht ist. Ausgewertet werden zum einen die Laufzeit der Signale zwischen den Gabelzinken und zum anderen die Laufzeit der Signale, die sich innerhalb der Gabel ausbreiten. Ebenfalls zwei einander gegenüberliegende Ultraschallwandler beschreibt die US 4,299,114. Dabei handelt es sich um ein Messgerät zur Erfassung des Füllstands. In einem U-förmigen Gehäuse sind zwei Ultraschallwandler einander gegenüber angeordnet. Für die Überwachung des Geräts werden zum einen die Laufzeit der Signale auf der direkten Verbindungstrecke zwischen den Ultraschallwandlern und einmal die Laufzeit der Signale, die sich über das Gehäuse zwischen den Ultraschallwandlern ausbreiten, ausgewertet.

Ausgehend vom genannten Stand der Technik liegt der vorliegenden Erfindung die Aufgabe zugrunde, die Funktionalität eines vibronischen Sensors weiter zu vergrößern.

Die Aufgabe wird gelöst durch eine Vorrichtung mit den Merkmalen des ersten Anspruchs.

Das piezoelektrische Element dient der Erzeugung eines Sendesignals welches in Form des zweiten Empfangssignals empfangen wird. Wenn das Sendesignal auf seinem Weg zumindest zeitweise und abschnittsweise das Medium durchläuft, wird es ebenfalls durch die physikalischen und/oder chemischen Eigenschaften des Mediums beeinflusst und kann entsprechend zur Bestimmung einer Prozessgröße des Mediums herangezogen werden.

Somit ist es im Rahmen der vorliegenden Erfindung möglich, zumindest zwei Messprinzipien in einer einzigen Vorrichtung zu realisieren. Die Sensoreinheit führt einerseits mechanische Schwingungen aus; zudem wird ein Sendesignal ausgesendet. In Reaktion auf die mechanischen Schwingungen und auf das Sendesignal werden zwei Empfangssignale empfangen und können beispielsweise hinsichtlich zumindest zwei unterschiedlicher Prozessgrößen ausgewertet werden. Die beiden Empfangssignale können dabei vorteilhaft unabhängig voneinander ausgewertet werden. So kann erfindungsgemäß die Anzahl ermittelbarer Prozessgrößen deutlich erhöht werden, was zu einer höheren Funktionalität des jeweiligen Sensors bzw. in einem erweiterten Anwendungsbereich resultiert. Darüber hinaus umfasst die erfindungsgemäße Vorrichtung eine Einheit zur Bestimmung und/oder Überwachung der Temperatur des Mediums. Diese Einheit umfasst erfindungsgemäß einen Temperatursensor. Der Temperatursensor ist mittels eines Temperatursignals beaufschlagbar. Anhand eines von der Einheit, nämlich des Temperatursensors, empfangenen dritten Empfangssignals kann dann die Temperatur, als dritte Prozessgröße, ermittelt werden. Die Temperatur hat Einfluss auf unterschiedlichste andere Prozessgrößen des Mediums. Durch eine zusätzliche Bestimmung und/oder Überwachung der Temperatur kann die Messgenauigkeit des Multisensors demnach deutlich verbessert und die Funktionalität des Sensors erweitert werden.

Erfindungsgemäß umfasst die Sensoreinheit zumindest ein erstes und ein zweites piezoelektrisches Element, wobei das erste und zweite piezoelektrische Element dazu ausgestaltet sind, die mechanisch schwingfähige Einheit mittels eines Anregesignals zu mechanischen Schwingungen anzuregen und die mechanischen Schwingungen der schwingfähigen Einheit zu empfangen und in ein erstes Empfangssignal umzuwandeln, wobei das erste piezoelektrische Element dazu ausgestaltet ist, ein Sendesignal auszusenden, und wobei das zweite piezoelektrische Element dazu ausgestaltet sein kann, das Sendesignal in Form eines zweiten Empfangssignals zu empfangen. Es können aber auch mehr als zwei piezoelektrische Elemente vorhanden sein, die an unterschiedlichen Positionen relativ zur schwingfähigen Einheit angeordnet sein können.

Erfindungsgemäß handelt es sich bei der mechanisch schwingfähigen Einheit um eine Schwinggabel mit einem ersten und einem zweiten Schwingelement, wobei das erste piezoelektrische Element zumindest teilweise in dem ersten Schwingelement und das zweite piezoelektrische Element zumindest teilweise in dem zweiten Schwingelement angeordnet ist. Entsprechende Ausgestaltungen einer Sensoreinheit sind beispielsweise in den Dokumenten DE102012100728A1 sowie in der bisher unveröffentlichten deutschen Patentanmeldung mit dem Aktenzeichen 102017130527.0 beschrieben worden. Bei den in den beiden Dokumenten beschriebenen möglichen Ausgestaltungen der Sensoreinheit handelt es sich um beispielhafte mögliche konstruktive Ausgestaltungen der Sensoreinheit. Es ist beispielsweise nicht zwingend notwendig, die piezoelektrischen Elemente ausschließlich im Bereich der Schwingelemente anzuordnen. Vielmehr können einzelne der verwendeten piezoelektrischen Elemente auch im Bereich der Membran oder in weiteren nicht für die vibronische Anregung verwendeten Schwingelementen, welche ebenfalls auf der Membran aufgebracht sind, angeordnet sein.

Der Temperatursensor kann beispielsweise in Form eines Widerstandselements oder eines Thermoelements ausgeführt sein.

Es ist von Vorteil, wenn die Einheit zur Bestimmung und/oder Überwachung der Temperatur derart angeordnet ist, dass sie eine möglichst gute thermische Ankopplung zum Medium aufweist. In diesem Falle ist eine Abweichung zwischen der Temperatur des Mediums und der Temperatur der Sensoreinheit gering. Die Einheit sollte entsprechend in einem Bereich der Vorrichtung angeordnet sein, welche zumindest zeitweise und/oder teilweise mit dem Medium in Kontakt kommt. Die Einheit kann beispielsweise im Bereich oder in der Nähe der schwingfähigen Einheit angeordnet sein. Es ist ebenfalls von Vorteil, wenn die Sensoreinheit so ausgestaltet ist, dass ihre thermische Kapazität möglichst gering ist. In diesem Falle ist eine Ansprechzeit bei der Temperaturbestimmung, im Falle einer Änderung der Temperatur des Mediums gering.

Nicht erfindungsgemäß kann vorgesehen sein, dass die Sensoreinheit eine Einheit zur Bestimmung und/oder Überwachung eines Drucks und/oder eine Einheit zur Bestimmung und/oder Überwachung einer Leitfähigkeit und/oder Kapazität des Mediums umfasst. Durch die Implementierung weiterer Messprinzipien in einem einzigen Sensor können der Applikationsbereich sowie die Messgenauigkeiten des Sensors noch weiter verbreitert bzw. erhöht werden.

Es ist einerseits denkbar, dass die Sensoreinheit gleichzeitig mittels des Anregesignals und mittels des Sendesignals beaufschlagt wird, wobei das Anregesignal und das Sendesignal einander überlagert werden. Alternativ kann die Sensoreinheit aber auch abwechselnd mittels des Anregesignal und mittels des Sendesignals beaufschlagt werden.

Bei dem Anregesignal handelt es sich beispielsweise um ein elektrisches Signal mit zumindest einer vorgebbaren Frequenz, insbesondere um ein sinusförmiges oder um ein rechteckförmiges Signal. Vorzugsweise wird die mechanisch schwingfähige Einheit zumindest zeitweise zu Resonanzschwingungen angeregt. Die mechanischen Schwingungen werden durch das die schwingfähige Einheit umgebende Medium beeinflusst, so dass anhand eines die Schwingungen repräsentierenden Empfangssignals Rückschlüsse auf verschiedene Eigenschaften des Mediums möglich sind.

Bei dem Sendesignal handelt es sich erfindungsgemäß um ein, insbesondere gepulstes, Ultraschallsignal, insbesondere um zumindest einen Ultraschallpuls. Als zweites angewendetes Messverfahren wird demnach im Rahmen der vorliegenden Erfindung eine Ultraschall-basierte Messung durchgeführt. Das jeweils ausgesendete Sendesignal durchläuft zumindest teilweise das Medium und wird von diesem in seinen Eigenschaften beeinflusst. Entsprechend können anhand des jeweils empfangenen zweiten Empfangssignals ebenfalls Rückschlüsse auf verschiedene Medien gezogen werden.

Unterschiedliche Prozessgrößen lassen sich vorteilhaft unabhängig voneinander bestimmen, so dass eine umfassende Analyse des jeweiligen Prozesses mittels eines einzigen Messgeräts ermöglicht wird. Dadurch, dass dieselbe Sensoreinheit für mehrere Messverfahren zum Einsatz kommt, kann darüber hinaus die Genauigkeit der Messungen deutlich erhöht werden. Darüber hinaus kann anhand der verschiedenen Messprinzipien eine Zustandsüberwachung der Vorrichtung vorgenommen werden.

Erfindungsgemäß werden zumindest drei zwei unterschiedliche Prozessgrößen ermittelt, wobei eine erste Prozessgröße anhand des ersten Empfangssignals ermittelt wird, und wobei eine zweite Prozessgröße anhand des zweiten Empfangssignals ermittelt wird.

Erfindungsgemäß wird der Einfluss der Temperatur des Mediums auf zumindest das erste und/oder zweite Empfangssignal oder zumindest eine aus einem Empfangssignal abgeleiteten Prozessgröße kompensiert.

Nicht erfindungsgemäß kann vorgesehen sein, dass anhand der Temperatur des Mediums eine Aussage über einen Prozess, den das Medium durchläuft, gemacht wird. Beispielsweise kann anhand der jeweils bestimmten Temperatur ein Mischvorgang unterschiedlicher Medien mit unterschiedlichen Temperaturen erkannt und/oder überwacht werden. In diesem Falle kann es kurzfristig zur kurzfristigen Fluktuation der Temperatur des Gemischs kommen, welche die Bestimmung der jeweiligen Prozessgröße negativ beeinflussen können. Ebenfalls kann erkannt werden, ob ein entsprechender Sensor außerhalb eines zulässigen Arbeitsbereichs für die Temperatur betrieben wird. Noch eine mögliche Aussage ist die Erkennung eines Reinigungsprozesses, welcher für den jeweiligen Sensor durchgeführt. Bei einem Reinigungsprozess können die unterschiedlichen Reinigungszyklen erkannt und/oder überwacht werden. Häufig folgen Behandlungen der Sensoreinheit bei hohen Temperaturen, beispielsweise mit Heißwasserdampf, Kaltwasserspülungen, welche mit großen Temperaturänderungen der mittels der Einheit zur Bestimmung und/oder Überwachung der Temperatur ermittelten Temperaturen einhergehen. Es ist ebenfalls denkbar, während einzelner Prozessschritte bei einem Reinigungsprozess eine Kalibration der Sensoreinheit durchzuführen, beispielsweise während eines Kaltspülvorgangs.

In einer besonders bevorzugten Ausgestaltung des erfindungsgemäßen Verfahrens wird ein erster Wert für die Temperatur mittels der Einheit zur Bestimmung und/oder Überwachung der Temperatur bestimmt, und/oder wobei ein zweiter Wert für die Temperatur anhand einer elektromechanischen Effizienz des ersten und/oder zweiten piezoelektrischen Elements ermittelt. Die Bestimmung der Temperatur anhand der elektromechanischen Effizienz eines piezoelektrischen Elements ist detailliert im Dokument DE102016120326A1 beschrieben.

Es ist dann von Vorteil, wenn der erste und zweite Wert für die Temperatur miteinander verglichen werden.

Ebenso ist es von Vorteil, wenn anhand des Vergleichs eine Diagnose zumindest einer Komponente der Sensoreinheit gestellt wird.

Die Diagnose kann beispielsweise einerseits eine Aussage über die Einheit zur Bestimmung und/oder Überwachung der Temperatur oder eine Aussage über den Zustand des ersten und/oder zweiten piezoelektrischen Elements beinhalten. Vorteilhaft kann auf diese Weise ein Plausibilitätscheck einzelner angewendeter Messprinzipien, insbesondere der beiden Empfangssignals, sowie eines von der Einheit zur Bestimmung und/oder Überwachung der Temperatur empfangenen Antwortsignals durchgeführt werden.

Erfindungsgemäß wird anhand des ersten Empfangssignals die Dichte des Mediums und anhand des zweiten Empfangssignals die Schallgeschwindigkeit innerhalb des Mediums bestimmt.

Erfindungsgemäß wird anhand der Schallgeschwindigkeit ein Referenzwert für die Dichte ermittelt, wobei der Referenzwert mittels eines aus dem ersten Empfangssignals ermittelten Wertes für die Dichte verglichen wird. Vorzugsweise wird anhand der aus dem zweiten Empfangssignal ermittelten Schallgeschwindigkeit eine Konzentration einer in einem Referenzmedium gelösten Referenzsubstanz in einem vorgebbaren Behälter ermittelt. Aus der Konzentration kann anschließend der Referenzwert für die Dichte des Referenzmediums ermittelt werden. Zudem kann ein Messwert für die Dichte aus dem ersten Empfangssignal ermittelt werden. Die beiden Werte für die Dichte können dann miteinander verglichen werden. Insbesondere kann der aus dem ersten Empfangssignal ermittelte Wert für die Dichte anhand des aus dem zweiten Empfangssignals ermittelten Referenzwerts für die Dichte justiert werden. Auf diese Weise kann eine nachteilige Beeinflussung der Geometrie des jeweils verwendeten Behältnisses auf die vibronische Bestimmung der Dichte kompensiert werden.

Nicht erfindungsgemäß kann vorgesehen sein, dass anhand des ersten und zweiten Empfangssignals und/oder anhand der ersten und zweiten Prozessgröße eine erste Konzentration einer ersten in dem Medium enthaltenen Substanz und eine zweite Konzentration einer zweiten in dem Medium enthaltenen Substanz ermittelt wird. Gemäß Stand der Technik sind für eine derartige Analyse des Mediums auf zwei unterschiedliche Substanzen hin in der Regel zwei separate Messgeräte erforderlich, welche unterschiedliche Messgrößen bereitstellen. Erfindungsgemäß kann dagegen mittels einer einzigen Vorrichtung zuverlässig eine Aussage über zwei unterschiedliche Komponenten in einem Medium getätigt werden.

Eine nicht erfindungsgemäße Verwendung betrifft die Überwachung eines Gärprozesses. Bei einer Gärung wird Zucker in Ethanol umgewandelt. Um eine qualitative Überwachung gewährleisten zu können, ist es deshalb erforderlich, sowohl die Konzentration von Zucker als auch von Ethanol zu bestimmen. Dies ist im Rahmen der vorliegenden Erfindung möglich.

Nicht erfindungsgemäß kann vorgesehen sein, dass anhand des ersten und zweiten Empfangssignals und/oder anhand der ersten und zweiten Prozessgröße ermittelt wird, ob sich ein Ansatz an der Sensoreinheit gebildet hat und/oder ob eine Drift und/oder Alterung der Sensoreinheit vorliegt. Die beiden Empfangssignale verhalten sich üblicherweise jeweils unterschiedlich in Abhängigkeit eines Ansatzes an der Sondeneinheit, einer Drift oder einer Alterung im Bereich der Sensoreinheit. Das Vorhandensein eines Ansatzes, einer Drift oder einer Alterung kann entsprechend beispielsweise anhand einer zeitlichen Betrachtung der beiden Empfangssignale und/oder Prozessgrößen festgestellt werden.

Es ist von Vorteil, wenn das erste und zweite Empfangssignal, die erste und zweite Prozessgröße und/oder ein zeitlicher Verlauf des ersten und zweiten Empfangssignals und/oder der ersten und zweiten Prozessgröße miteinander verglichen werden. Aus dem Vergleich kann dann auf das Vorhandensein eines Ansatzes, auf eine Drift oder eine Alterung der Sensoreinheit geschlossen werden. Da zumindest zwei Empfangssignale bzw. Prozessgrößen zugänglich sind, kann eine hohe Genauigkeit hinsichtlich der jeweils getroffenen Aussagen über einen Ansatz, eine Drift oder eine Alterung erzielt werden. Durch die erfindungsgemäße Realisierung zweier unterschiedlicher Messungen mit einer einzigen Sensoreinheit kann entsprechend das Vorhandensein von Ansatz, oder auch einer Drift oder eine Alterung der Sensoreinheit zuverlässig erkannt werden.

In einer nicht erfindungsgemäßen Ausgestaltung wird bei der Bestimmung und/oder Überwachung zumindest einer Prozessgröße oder bei der Bestimmung einer aus zumindest einer Prozessgröße und/oder zumindest einem Empfangssignal abgeleiteten Größe ein Einfluss eines Ansatzes einer Drift und/oder einer Alterung der Sensoreinheit auf das erste und/oder zweite Empfangssignal reduziert oder kompensiert. Der Einfluss eines Ansatzes, einer Drift und/oder Alterung der Sensoreinheit kann demnach bei der Bestimmung und/oder Überwachung der jeweiligen Prozessgröße berücksichtigt werden, so dass die jeweilige Prozessgröße ohne auf dem Vorhandensein eines Ansatzes, einer Drift und/oder Alterung bestimmt werden kann. Zur Reduzierung oder zur Kompensation des Einflusses kann beispielsweise ein geeigneter, insbesondere prozessabhängiger, Algorithmus hinterlegt werden, anhand dessen ein nicht durch den Einfluss des Ansatzes, der Drift und/oder Alterung der Sensoreinheit verfälschter Wert für die jeweilige Prozessgröße ermittelbar ist. Somit kann eine verbesserte Messgenauigkeit erreicht sowie eine Möglichkeit zur vorausschauenden Wartung (engl. predictive maintenance) bereitgestellt werden.

Die Erfindung wird anhand der nachfolgenden Figuren näher erläutert. Es zeigt:
Fig. 1: eine schematische Skizze eines vibronischen Sensors gemäß Stand der Technik,
Fig. 2 mehrere mögliche, an sich aus dem Stand der Technik bekannte, Ausgestaltungen einer Sensoreinheit, welche zur Durchführung des erfindungsgemäßen Verfahrens geeignet sind, und
Fig. 3 eine mögliche Ausgestaltung einer erfindungsgemäßen Vorrichtung mit einer Einrichtung zur Bestimmung der Temperatur des Mediums.

In den Figuren sind gleiche Elemente jeweils mit demselben Bezugszeichen versehen.

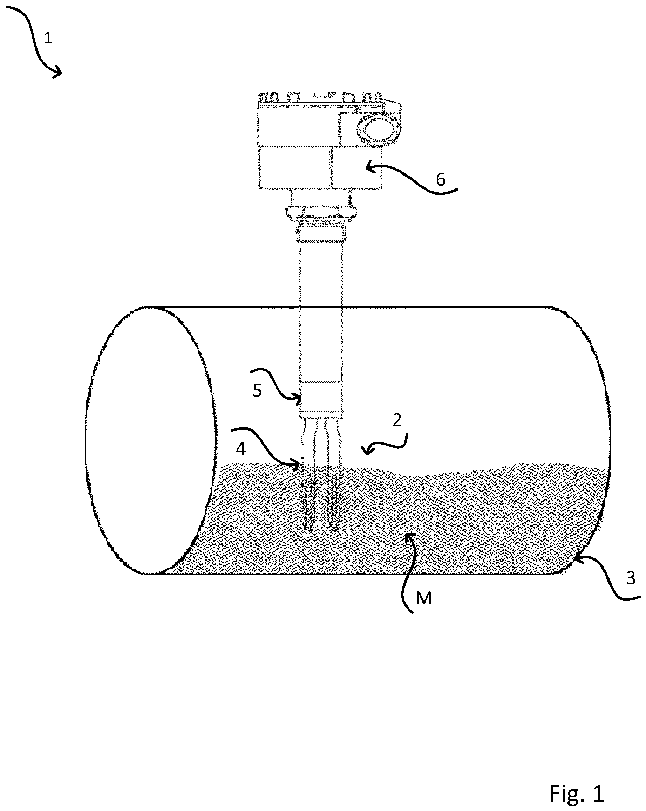

In Fig. 1 ist ein vibronischer Sensor 1 mit einer Sensoreinheit 2 gezeigt. Der Sensor verfügt über eine mechanisch schwingfähige Einheit 4 in Form einer Schwinggabel, welche teilweise in ein Medium M eintaucht, welches sich in einem Behälter 3 befindet. Die schwingfähige Einheit 4 wird mittels der Anrege-/Empfangseinheit 5 zu mechanischen Schwingungen angeregt, und kann beispielsweise durch einen piezoelektrischen Stapel- oder Bimorphantrieb sein. Andere vibronische Sensoren verfügen beispielsweise über elektromagnetische Antriebs-/Empfangseinheiten 5. Es ist sowohl möglich, eine einzige Antriebs-/Empfangseinheit 5 zu verwenden, welche zur Anregung der mechanischen Schwingungen sowie zu deren Detektion dient. Ebenso ist es aber denkbar, je eine Antriebseinheit und eine Empfangseinheit zu realisieren. Dargestellt ist in Fig. 1 ferner eine Elektronikeinheit 6, mittels welcher die Signalerfassung, -auswertung und/oder -speisung erfolgt.

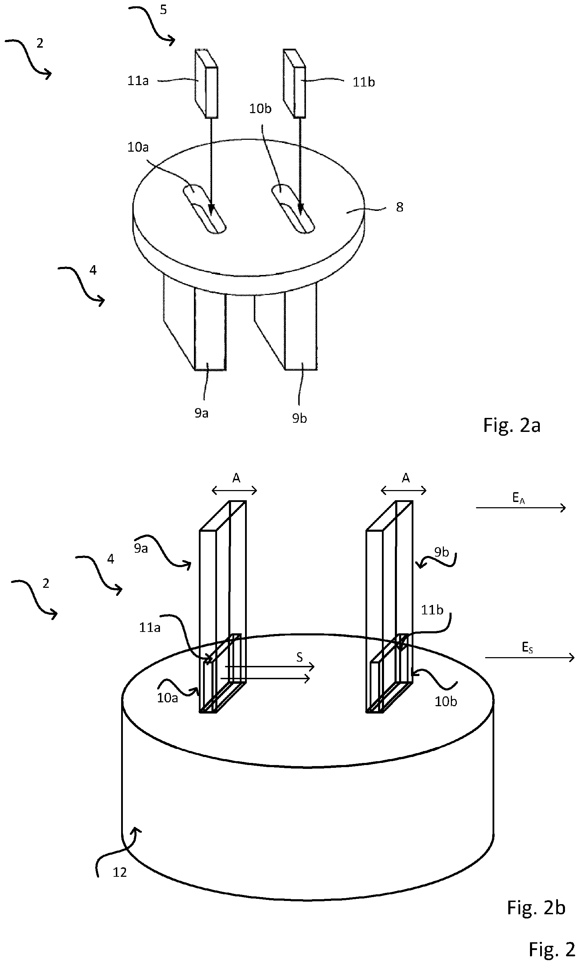

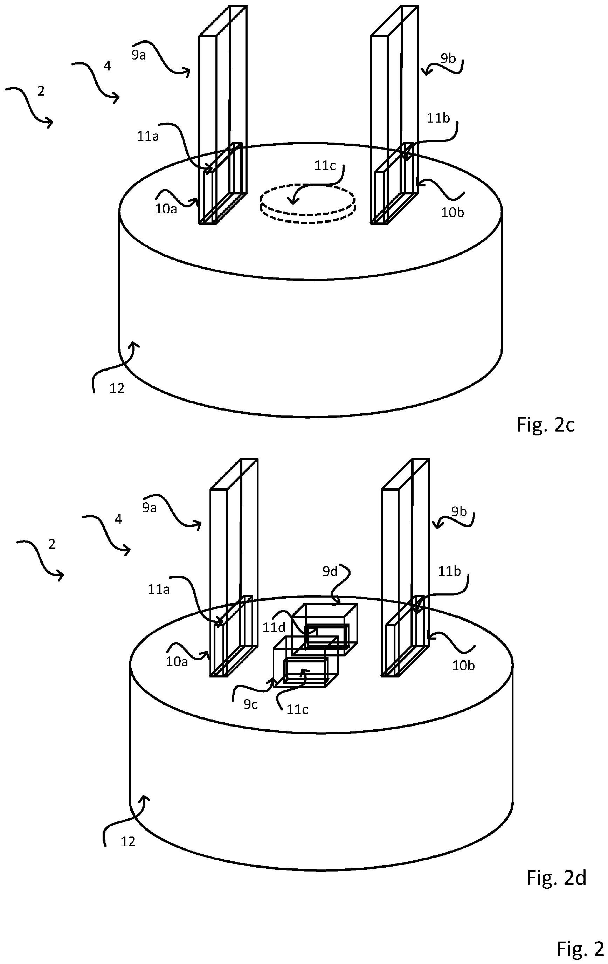

In Fig. 2 sind beispielhaft verschiedene Sensoreinheiten 2 gezeigt, welche sich zur Durchführung eines erfindungsgemäßen Verfahrens eignen. Die in Fig. 2a gezeigte mechanisch schwingfähige Einheit 4 umfasst zwei an einer Basis 8 angebrachte Schwingelemente 9a,9b, welche mithin auch als Gabelzinken bezeichnet werden. Optional kann an den Endseiten der beiden Schwingelemente 9a,9b außerdem jeweils ein Paddel angeformt sein [hier nicht gezeigt]. In jedem der beiden Schwingelemente 9a,9b ist jeweils ein, insbesondere taschenartiger, Hohlraum 10a, 10b eingebracht, in welchem jeweils zumindest ein piezoelektrisches Element 11a, 11b der Antriebs-/Empfangseinheit 5 angeordnet ist. Vorzugsweise sind die piezoelektrischen Elemente 11a und 11b innerhalb der Hohlräume 10a und 10b vergossen. Die Hohlräume 10a, 10b können dabei so beschaffen sein, dass sich die beiden piezoelektrischen Elemente 11a, 11b vollständig oder teilweise im Bereich der beiden Schwingelemente 9a, 9b befinden Eine solche sowie ähnliche Anordnungen sind in der DE102012100728A1 ausführlich beschrieben.

Eine weitere beispielhafte, mögliche Ausgestaltung einer Sensoreinheit 2 ist in Fig. 2b dargestellt. Die mechanisch schwingfähige Einheit 4 verfügt über zwei parallel zueinander ausgerichtete, hier stabförmig ausgestaltete, auf einem scheibenförmigen Element 12 angebrachte, Schwingelemente 9a, 9b, welche getrennt voneinander zu mechanischen Schwingungen anregbar sind, und bei denen die Schwingungen ebenfalls getrennt voneinander empfangen und ausgewertet werden können. Beide Schwingelemente 9a und 9b weisen jeweils einen Hohlraum 10a und 10b auf, in welchen im dem scheibenförmigen Element 12 zugewandten Bereich jeweils zumindest ein piezoelektrisches Element 11a und 11b angeordnet ist. Bezüglich der Ausgestaltung gemäß Fig. 2b sei wiederum ferner auf in die bisher unveröffentlichte deutsche Patentanmeldung mit dem Aktenzeichen DE102017130527A1 verwiesen.

Wie in Fig. 2b schematisch eingezeichnet, wird erfindungsgemäß die Sensoreinheit 2 einerseits mit einem Anregesignal A beaufschlagt, derart, dass die schwingfähige Einheit 4 zu mechanischen Schwingungen angeregt wird. Die Schwingungen werden dabei vermittels der beiden piezoelektrischen Elemente 11a und 11b erzeugt. Es ist sowohl denkbar, dass beide piezoelektrischen Elemente mit demselben Anregesignal A beaufschlagt werden, als auch eine Beaufschlagung des ersten Schwingelements 11a mittels eines ersten Anregesignals A₁ und des zweiten Schwingelements 11b mittels eines zweiten Anregesignals A₂. Ebenso ist es sowohl denkbar, dass anhand der mechanischen Schwingungen ein erstes Empfangssignal E_{A}, oder von jedem Schwingelement 9a,9b ein separates Empfangssignal E_{A1} bzw. E_{A2} empfangen wird.

Darüber hinaus wird vom ersten piezoelektrischen Element 11a ausgehend ein Sendesignal S ausgesendet, welches von dem zweiten piezoelektrischen Element 11b in Form eines zweiten Empfangssignals Es empfangen wird. Da die beiden piezoelektrischen Elemente 11a und 11b zumindest im Bereich der Schwingelemente 9a und 9b angeordnet sind, durchläuft das Sendesignal S das Medium M, sofern die Sensoreinheit 2 mit dem Medium M in Kontakt ist und wird entsprechend von den Eigenschaften des Mediums M beeinflusst. Erfindungsgemäß handelt es sich bei dem Sendesignal S um ein, insbesondere gepulstes, Ultraschallsignal, insbesondere um zumindest einen Ultraschallpuls. Ebenso ist es aber denkbar, dass das Sendesignal S von dem ersten piezoelektrischen Element 11a im Bereich des ersten Schwingelements 9a ausgesendet wird und an dem zweiten Schwingelement 9b reflektiert wird. In diesem Falle wird das zweite Empfangssignal Es vom ersten piezoelektrischen Element 11a empfangen. Das Sendesignal S durchläuft in diesem Falle das Medium M zweimal, was zu einer Verdoppelung einer Laufzeit τ des Sendesignals S führt.

Eine weitere, beispielhafte Möglichkeit ist in Fig. 2c dargestellt. Hier ist ein drittes piezoelektrisches Element 11c im Bereich der Membran 12 vorgesehen. Das dritte piezoelektrische Element 11c dient der Erzeugung des Anregesignals A und zum Empfangen des ersten Empfangssignals E₁; das erste 11a und zweite piezoelektrische Element 11b dienen der Erzeugung des Sendesignals S bzw. dem Empfangen des zweiten Empfangssignals E₂. Alternativ ist es beispielsweise möglich, mit dem ersten 11a und/oder zweiten piezoelektrischen Element 11b das Anregesignal A und das Sendesignal S zu erzeugen sowie das zweite Empfangssignal E₂ zu empfangen, wobei das dritte piezoelektrische Element 11c zum Empfangen des ersten Empfangssignals E₁ dient. Ebenso ist es möglich, mit dem ersten 11a und/oder zweiten piezoelektrischen Element 11b das Sendesignal S und mit dem dritten piezoelektrischen Element 11c das Anregesignal A zu erzeugen und mit dem ersten 11a und/oder zweiten piezoelektrischen Element 11b das erste E₁ und/oder zweite Empfangssignal E₂ zu empfangen.

Noch eine mögliche Ausgestaltung der Vorrichtung 1 ist Gegenstand von Fig. 2d. Die Vorrichtung umfasst ausgehend von der Ausgestaltung aus Fig. 2b ein drittes 9c und ein viertes Schwingelement 9d. Diese dienen jedoch nicht einer Schwingungserzeugung. Vielmehr ist in den zusätzlichen Elemente 9c, 9d jeweils ein drittes 11c und viertes piezoelektrisches Element 11d angeordnet. In diesem Falle wird die vibronische Messung mittels der ersten beiden piezoelektrischen Elemente 11a, 11b und die Ultraschallmessung mittels der anderen beiden piezoelektrischen Elemente 11c, 11d durchgeführt. Auch hier kann je Messprinzip auf ein piezoelektrisches Element, z. B. 11b und 11d verzichtet werden. Aus Symmetriegründen ist es dagegen vorteilhaft, stets zwei zusätzliche Schwingelemente 9c, 0d zu verwenden.

Das erste E_{A} und zweite Empfangssignal Es resultieren aus unterschiedlichen Messverfahren und können unabhängig voneinander hinsichtlich zumindest einer Prozessgröße P ausgewertet werden. In dieser Hinsicht sei auf die bisher unveröffentlichte deutsche Patentanmeldung mit dem Aktenzeichen 102018127526.9 verwiesen.

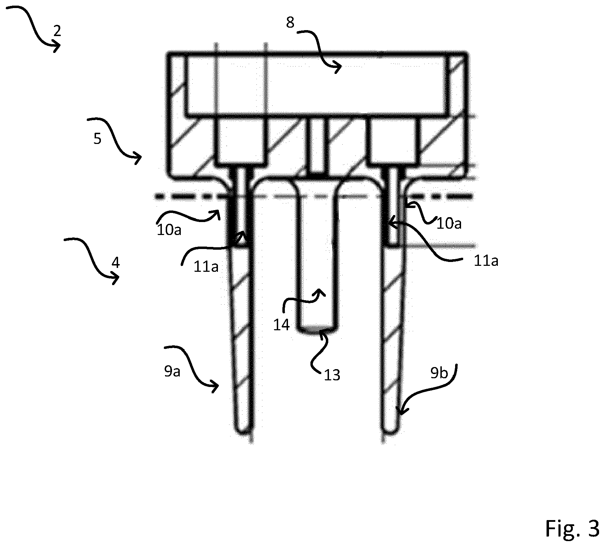

Darüber hinaus wird erfindungsgemäß die Temperatur des Mediums bestimmt und/oder überwacht . Hierzu verfügt die erfindungsgemäße Vorrichtung über eine Einheit zur Bestimmung und/oder Überwachung der Temperatur, wie in Fig. 3 illustriert. In Fig. 3 ist eine Sensoreinheit 2 analog zur Ausgestaltung aus Fig. 2a gezeigt. Zwischen den beiden Schwingelementen 9a und 9b der in Form einer Schwinggabel ausgestalteten schwingfähigen Einheit 4 ist die Einheit 13 zur Bestimmung und/oder Überwachung der Temperatur T des Mediums angeordnet, welche eine Temperatursensor 14, beispielsweise in Form eines Widerstandselements oder eines Thermoelements umfasst.

Alternativ kann die Einheit 13 zur Bestimmung und/oder Überwachung der Temperatur aber beispielsweise auch im Bereich eines Schwingelements 9a, 9b oder im Bereich der Basis 8 angeordnet sein.

### Bezugszeichenliste

- 1: Vibronischer Sensor
- 2: Sensoreinheit
- 3: Behälter
- 4: Schwingfähige Einheit
- 5: Antriebs-/Em pfangseinheit
- 6: Elektronik
- 8: Basis
- 9a, 9b: Schwingelemente
- 10a, 10b: Hohlräume
- 11a, 11b: piezoelektrische Elemente
- 12: scheibenförmiges Element
- 13: Einheit zur Bestimmung und/oder Überwachung der Temperatur
- 14: Temperatursensor

- M: Medium
- P: Prozessgröße
- T: Temperatur
- A: Anregesignal
- S: Sendesignal
- E_{A}: erstes Empfangssignal
- E_{S}: zweites Empfangssignal
- E_{T}: drittes Empfangssignal
- ΔΦ: vorgebbare Phasenverschiebung

## Patentansprüche

1. Vorrichtung (1) zur Bestimmung und/oder Überwachung von zumindest drei
unterschiedlichen Prozessgrößen (P1, P2) eines Mediums (M) umfassend
eine Sensoreinheit (2) mit
einer mechanisch schwingfähigen Einheit (4), welche eine Schwinggabel mit einem ersten Schwingelement (9a) und einem zweiten Schwingelement (9b) ist, zumindest einem ersten piezoelektrischen Element (11a) und einem zweiten piezoelektrischen Element (11b), und
einer Einheit (13), die einen Temperatursensor (14) umfasst, zur Bestimmung und/oder Überwachung einer Temperatur (T) des Mediums (M)
und mit
einer Elektronik (6)
wobei das erste piezoelektrische Element (11a) und das zweite piezoelektrische Element (11b) dazu ausgestaltet sind,
die mechanisch schwingfähige Einheit (4) mittels eines Anregesignals (A) zu mechanischen Schwingungen anzuregen, und die mechanischen Schwingungen der schwingfähigen Einheit (4) zu empfangen und in ein erstes Empfangssignal (E_{A}) umzuwandeln,
wobei das erste piezoelektrische Element (11a) dazu ausgestaltet ist,
ein Sendesignal (S), bei dem es sich um ein Ultraschallsignal handelt, auszusenden,
wobei das erste piezoelektrische Element (11a) oder das zweite piezoelektrische Element (11b) dazu ausgestaltet ist,
das Sendesignal (S) in Form eines zweiten Empfangssignals (Es) zu empfangen, und
wobei die Elektronik (6) dazu ausgestaltet ist,
anhand des ersten Empfangssignals (E_{A}) eine Dichte des Mediums als eine erste Prozessgröße (P1) zu bestimmen,
anhand des zweiten Empfangssignals (Es) eine Schallgeschwindigkeit innerhalb des Mediums als eine zweite Prozessgröße (P2) zu bestimmen,
anhand eines dritten, von der Einheit (13) empfangenen Empfangssignals (E_{T}) die Temperatur (T) des Mediums (M) als eine dritte Prozessgröße zu bestimmen, einen Einfluss der Temperatur (T) des Mediums (M) auf das erste Empfangssignal (E_{A}) und/oder auf das zweite Empfangssignal (Es) zu kompensieren, und
anhand der ermittelten Schallgeschwindigkeit einen Referenzwert für die Dichte zu ermitteln und mit einem aus dem ersten Empfangssignals (E_{A}) ermittelten Wert für die Dichte zu vergleichen,
wobei das erste piezoelektrische Element (11a) zumindest teilweise in dem ersten Schwingelement (9a) und das zweite piezoelektrische Element (11b) zumindest teilweise in dem zweiten Schwingelement (9b) angeordnet ist.

2. Vorrichtung (1) nach Anspruch 1,
wobei die Elektronik (6) dazu ausgestaltet ist,
einen ersten Wert für die Temperatur (T) mittels der Einheit (13) zur Bestimmung und/oder Überwachung der Temperatur (T) zu bestimmen,
einen zweiten Wert für die Temperatur (T) anhand einer elektromechanischen Effizienz des ersten piezoelektrischen Elements (11a) und/oder zweiten piezoelektrischen Elements (11b) zu ermitteln,
den ersten Wert und den zweiten Wert für die Temperatur (T) miteinander zu vergleichen, und
anhand des Vergleichs eine Diagnose zumindest einer Komponente der Sensoreinheit (2) zu stellen.

## Claims

1. A device (1) for determining and/or monitoring at least three different process variables (P1, P2) of a medium (M), comprising a sensor unit (2) with
a mechanically resonant unit (4) that is a vibrating fork with one first vibrating element (9a) and one second vibrating element (9b), at least one first piezoelectric element (11a) and one second piezoelectric element (11b), and
a unit (13) that comprises a temperature sensor (14) for determining and/or monitoring a temperature (T) of the medium (M)
and with
electronics (6)
wherein the first piezoelectric element (11a) and the second piezoelectric element (11b) are configured to
cause the mechanically resonant unit (4) to vibrate mechanically using a excitation signal (A), as well as to receive the mechanical vibrations of the resonant unit (4) and convert these into a first reception signal (E_{A}),
wherein the first piezoelectric element (11a) is configured to
transmit one transmitter signal (S), which is an ultrasonic signal,
wherein the first piezoelectric element (11a) or the second piezoelectric element (11b) is configured to
receive the transmission signal (S) in the form of a second reception signal (Es) and
wherein the electronics (6) are configured to
determine a density of the medium as a first process variable (P1) on the basis of the first reception signal (E_{A}),
determine a speed of sound within the medium as a second process variable (P2) on the basis of the second reception signal (Es),
determine the temperature (T) of the medium (M) as a third process variable on the basis of a third reception signal (E_{T}) that is received by the unit (13),
compensate for an influence of the temperature (T) of the medium (M) on the first reception signal (E_{A}) and/or on the second reception signal (Es), and
determine a reference value for the density on the basis of the determined speed of sound and compare this with a value for the density determined from the first reception signal (E_{A}),
wherein the first piezoelectric element (11a) is arranged at least partially in the first vibrating element (9a), and the second piezoelectric element (11b) is arranged at least partially in the second vibrating element (9b).

2. A device (1) according to claim 1,
wherein the electronics (6) are configured to
determine a first value for the temperature (T) using the unit (13) for determining and/or monitoring the temperature (T),
determine a second value for the temperature (T) on the basis of an electromechanical efficiency of the first piezoelectric element (11a) and/or the second piezoelectric element (11b),
compare the first value and the second value for the temperature (T) with one another, and
make a diagnosis of at least one component of the sensor unit (2) on the basis of the comparison.

## Revendications

1. Dispositif (1) destiné à la détermination et/ou à la surveillance d'au moins trois grandeurs process différentes (P1, P2) d'un produit (M), lequel dispositif comprend
une unité de capteur (2) avec
une unité apte à vibrer mécaniquement (4), laquelle est une fourche vibrante avec un premier élément vibrant (9a) et un deuxième élément vibrant (9b), au moins un premier élément piézoélectrique (11a) et un deuxième élément piézoélectrique (11b), et
une unité (13), laquelle comprend un capteur de température (14) et est destinée à la détermination et/ou à la surveillance d'une température (T) du produit (M)
et avec
une électronique (6),
le premier élément piézoélectrique (11a) et le deuxième élément piézoélectrique (11b) étant conçus
pour exciter l'unité apte à vibrer mécaniquement (4) au moyen d'un signal d'excitation (A) en vibrations mécaniques, et pour recevoir les vibrations mécaniques de l'unité apte à vibrer mécaniquement (4) et les convertir en un premier signal de réception (E_{A}),
le premier élément piézoélectrique (11a) étant conçu
pour émettre un signal d'émission (S), lequel est un signal ultrasonore,
le premier élément piézoélectrique (11a) ou le deuxième élément piézoélectrique (11b) étant conçu
pour recevoir le signal d'émission (S) sous la forme d'un deuxième signal de réception (Es), et
l'électronique (6) étant conçue
pour déterminer, à l'aide du premier signal de réception (E_{A}), une densité du produit en tant que première grandeur process (P1),
pour déterminer, à l'aide du deuxième signal de réception (Es), une vitesse du son à l'intérieur du produit en tant que deuxième grandeur process (P2),
pour déterminer, à l'aide d'un troisième signal de réception (E_{T}) reçu par l'unité (13), la température (T) du produit (M) en tant que troisième grandeur process, pour compenser une influence de la température (T) du produit (M) sur le premier signal de réception (E_{A}) et/ou sur le deuxième signal de réception (Es), et
pour déterminer une valeur de référence de densité à l'aide de la vitesse du son déterminée et pour la comparer à une valeur de densité déterminée à partir du premier signal de réception (E_{A}),
le premier élément piézoélectrique (11a) étant disposé au moins partiellement dans le premier élément vibrant (9a) et le deuxième élément piézoélectrique (11b) étant disposé au moins partiellement dans le deuxième élément vibrant (9b).

2. Dispositif selon la revendication 1,
pour lequel l'électronique (6) est conçue
pour déterminer une première valeur pour la température (T) au moyen de l'unité (13) destinée à la détermination et/ou à la surveillance de la température (T), pour déterminer une deuxième valeur pour la température (T) à l'aide d'une efficacité électromécanique du premier élément piézoélectrique (11a) et/ou du deuxième élément piézoélectrique (11b),
pour comparer entre elles la première valeur et la deuxième valeur pour la température (T), et
pour établir un diagnostic d'au moins un composant de l'unité de capteur (2) à l'aide de la comparaison.
